# DEMANDE DE BREVET EUROPEEN

(11) **EP 3 415 376 A1**
(43) Date de publication de la demande: **19.12.2018**
(21) Numéro de dépôt: 18175696.6
(22) Date de dépôt: 04.06.2018
(51) Int. Cl.: B60R 21/213, B60R 21/232

(54) **AGENCEMENT D'UN AIRBAG RIDEAU SUR UNE CAISSE DE VÉHICULE**

(30) Priorité: 14.06.2017 FR 1755384
(71) Demandeur: RENAULT s.a.s., 92100 Boulogne-Billancourt (FR)
(72) Inventeur: LEFEBVRE, Benjamin, 91470 LES MOLIERES (FR)

(57) **Abrégé**

Agencement (4) pour un véhicule automobile (1), l'agencement comprenant
- un dispositif d'airbag (30) muni d'un sac (31) apte à se déployer entre un passager (3) et notamment une vitre latérale (5a, 5b) d'un véhicule automobile (1), et muni d'un générateur (32) de forme générale allongée selon un premier axe (A1) et apte à expulser un gaz pour gonfler le sac (31), et
- un pied milieu (10) d'une caisse (2) d'un véhicule automobile (1), le pied milieu (10) s'étendant selon un deuxième axe (A2) sensiblement vertical,
caractérisé en ce que le générateur (32) est positionné le long du pied milieu (10), le premier axe (A1) et le deuxième axe (A2) étant sensiblement parallèles.

## Description

La présente invention concerne un agencement comprenant un dispositif d'airbag et un pied milieu d'une caisse d'un véhicule, le dispositif d'airbag comprenant un sac apte à se déployer entre un passager et une vitre latérale du véhicule. L'invention concerne aussi un dispositif de sécurité. L'invention concerne également un véhicule automobile comprenant un tel agencement ou un tel dispositif de sécurité.

La réglementation des véhicules automobiles tend sans cesse à augmenter les exigences de sécurité passive. Pour répondre à ces exigences, on connaît l'utilisation de ceintures de sécurité et de dispositifs d'airbag. Un dispositif d'airbag comprend un sac gonflable dans lequel de l'air ou un autre gaz est très rapidement injecté depuis un générateur par une réaction chimique explosive. On connaît notamment l'utilisation de dispositifs d'airbag frontaux aptes à se déployer devant un conducteur ou devant un passager. Les dispositifs d'airbag frontaux sont particulièrement efficaces dans le cas d'un choc orienté selon l'axe longitudinal du véhicule.

On connaît également l'utilisation d'un dispositif d'airbag rideau comprenant un sac apte à se déployer entre un passager et une vitre latérale d'un véhicule. Un tel dispositif tend à protéger le passager vis-à-vis des chocs latéraux ou vis-à-vis de tout élément pouvant surgir latéralement consécutivement à un choc du véhicule. Avant son éventuel déclenchement, le dispositif d'airbag rideau est positionné le long d'un brancard de la caisse. Un brancard de la caisse est un élément longitudinal de la caisse au dessus des vitres latérales. Même lorsque le sac est en configuration repliée, un tel dispositif d'airbag rideau est volumineux. Une distance minimum entre le sac et le passager est souhaitable pour le confort du passager et pour garantir un gonflage suffisant du sac avant que le passager entre en contact avec le sac. L'utilisation de tels dispositifs d'airbag est donc limitée aux types de véhicules disposant de suffisamment d'espace entre le brancard et la tête d'un passager.

Le but de l'invention est de fournir un agencement d'un dispositif d'airbag remédiant aux inconvénients ci-dessus et améliorant les agencements connus de l'art antérieur. En particulier, l'invention permet de réaliser un agencement d'un dispositif d'airbag qui offre un meilleur confort et une meilleure sécurité pour un passager.

L'invention se rapporte à un agencement pour un véhicule automobile, l'agencement comprenant :
- un dispositif d'airbag muni d'un sac apte à se déployer à proximité d'un passager d'un véhicule automobile (1) ou entre un passager et une vitre latérale d'un véhicule automobile, et muni d'un générateur de forme générale allongée selon un premier axe et apte à expulser un gaz pour gonfler le sac, et
- un pied milieu d'une caisse d'un véhicule automobile ou un pied milieu pour une caisse d'un véhicule automobile, le pied milieu s'étendant selon un deuxième axe sensiblement vertical,
le générateur étant positionné le long du pied milieu, le premier axe et le deuxième axe étant sensiblement parallèles.

Le sac peut être apte à se déployer d'une première configuration à une deuxième configuration, le sac étant dans sa première configuration replié suivant une forme allongée selon un troisième axe. L'agencement peut comprendre un brancard pour caisse, le brancard s'étendant selon un quatrième axe sensiblement parallèle à un axe longitudinal d'un véhicule automobile, le troisième axe et le quatrième axe étant sensiblement parallèles.

L'agencement peut comprendre un point de renvoi d'une ceinture de sécurité, le générateur étant positionné à hauteur du point de renvoi.

Le générateur peut être positionné dans un évidement du pied milieu, notamment dans un évidement d'une doublure de pied milieu.

L'évidement du pied milieu peut être un ajour de forme allongée suivant un axe sensiblement parallèle au deuxième axe.

Le pied milieu et/ou le brancard peuvent comprendre une forme arrondie et/ou un élément de protection en caoutchouc, pour préserver le sac d'un endommagement lors de son déploiement.

Le dispositif d'airbag peut comprendre une dérivation en aval du générateur, une première branche issue de la dérivation étant reliée à une partie avant du sac apte à se déployer entre un passager avant et une vitre latérale avant d'un véhicule automobile, une deuxième branche issue de la dérivation étant reliée à une partie arrière du sac apte à se déployer entre un passager arrière et une vitre latérale arrière d'un véhicule automobile.

L'agencement peut comprendre une patte au niveau du pied milieu pour calibrer le gonflage d'une portion du sac.

L'agencement peut comprendre un dispositif de sécurité comprenant le dispositif d'airbag, un point de renvoi d'une ceinture de sécurité et un support, le générateur étant fixé sur une première face du support, le point de renvoi étant fixé sur une deuxième face du support, le support étant fixé sur le pied milieu.

L'invention se rapporte également à un dispositif de sécurité comprenant un dispositif d'airbag, un point de renvoi d'une ceinture de sécurité et un support, un générateur du dispositif d'airbag étant fixé sur une première face du support, le point de renvoi étant fixé sur une deuxième face du support, le support étant destiné à être fixé sur un pied milieu de caisse de véhicule automobile.

L'invention se rapporte également à une caisse de véhicule automobile, comprenant un agencement tel que défini précédemment et/ou un dispositif de sécurité tel que défini précédemment.

L'invention se rapporte également à un véhicule automobile comprenant un agencement tel que défini précédemment et/ou un dispositif de sécurité tel que défini précédemment et/ou une caisse de véhicule automobile telle que définie précédemment.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique d'un véhicule automobile équipé d'un agencement d'un dispositif d'airbag selon un mode de réalisation de l'invention.
La figure 2 est une vue schématique partielle d'un brancard et d'un pied milieu d'une caisse d'un véhicule automobile selon un mode de réalisation de l'invention.
La figure 3 est une vue schématique partielle d'un dispositif de sécurité selon un mode de réalisation de l'invention.
La figure 4 est une vue schématique en coupe d'un agencement d'un dispositif d'airbag selon l'état de l'art.
La figure 5 est une vue schématique en coupe d'un agencement d'un dispositif d'airbag selon un mode de réalisation de l'invention.

Sur l'ensemble des figures et de la description, la gauche et la droite sont définies selon le point de vue d'un conducteur. L'axe X désigne l'axe longitudinal du véhicule. En marche avant et en ligne droite, le véhicule progresse de l'arrière vers l'avant selon une direction parallèle à son axe longitudinal. L'axe X est orienté de l'avant vers l'arrière du véhicule, c'est-à-dire dans le sens de la marche arrière. L'axe Y désigne l'axe transversal du véhicule. L'axe Y est orienté de la gauche vers la droite. L'axe Z désigne l'axe perpendiculaire à l'axe X et à l'axe Y. L'axe Z est un axe vertical lorsque le véhicule repose sur un sol horizontal. L'axe Z est orienté de bas en haut. Les axes X, Y et Z forment un repère orthonormé direct. Sur l'ensemble des figures et de la description, on considère que le véhicule repose sur un sol horizontal. D'autre part, dans un souci de simplification de la description, ce même repère, défini par référence à un véhicule, sera aussi utilisé pour un dispositif de sécurité, même considéré hors d'un véhicule, puisqu'il est destiné à un montage selon une orientation spécifique sur le véhicule.

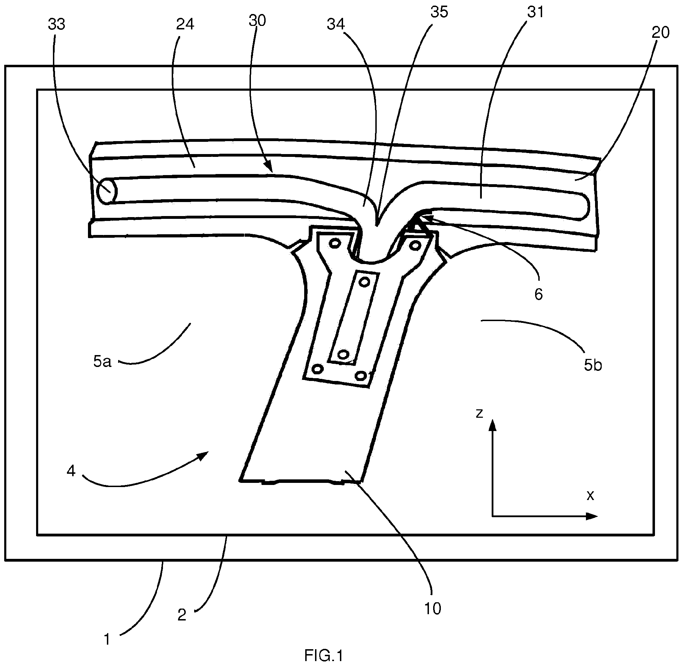

La figure 1 illustre schématiquement un véhicule automobile 1 comprenant une caisse 2. Le véhicule automobile est quelconque, notamment il peut s'agir par exemple d'une berline, d'un monospace, d'un véhicule utilitaire ou d'un véhicule à trois roues. Le véhicule automobile comprend une caisse formant une structure rigide contribuant à protéger les passagers 3 lors d'une collision du véhicule automobile 1.

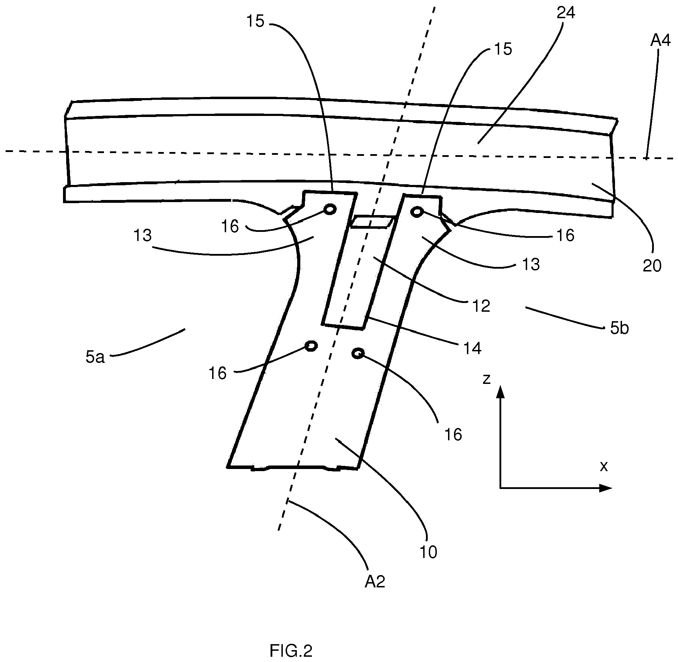

En particulier la caisse 2 comprend un pied milieu 10 s'étendant selon un axe A2 sur la hauteur de la caisse 2. Le pied milieu 10 fait le lien entre la partie haute du véhicule automobile, également dénommée « pavillon » et la partie basse du véhicule automobile, également dénommée « bas de caisse ». Le pied milieu 10 est un montant permettant de rigidifier la caisse. La caisse 2 comprend généralement deux pieds milieu à droite et à gauche, symétriques ou quasi symétriques l'un par rapport à l'autre. Le pied milieu 10 illustré sur les figures 1 et 2 est le pied milieu du coté droit de la caisse mais l'invention pourrait bien sûr s'appliquer aussi bien au coté gauche de la caisse. Généralement, le pied milieu 10 est positionné à hauteur d'un dossier d'un siège passager avant, entre une portière avant et une portière arrière. Toutefois, le pied milieu pourrait aussi bien être décalé vers l'avant ou vers l'arrière par rapport au dossier du siège passager avant. Le véhicule automobile pourrait également ne pas comporter de portière arrière, voire ne pas comporter de sièges arrières. L'axe A2 selon lequel s'étend le pied milieu 3 est par exemple sensiblement vertical. L'orientation de l'axe A2 est adaptée en fonction de la silhouette extérieure souhaitée pour le véhicule automobile. De manière générale, de préférence, on peut considérer dans la suite du document, que deux axes sensiblement parallèles forment un angle inférieur ou égal à une valeur indicative de 30°, voire de 15°.

D'autre part, la caisse 2 comprend également un brancard 20 s'étendant selon un axe A4. Le brancard 20 s'étend généralement depuis un montant de baie de pare-brise vers l'arrière du véhicule automobile 1, par exemple jusqu'à une custode. La caisse 2 comprend généralement deux brancards à droite et à gauche, symétriques ou quasi symétriques l'un par rapport à l'autre. Le brancard 20 illustré sur les figures 1 et 2 est le brancard du coté droit de la caisse mais l'invention pourrait bien sûr s'appliquer aussi bien au coté gauche de la caisse. L'axe A4 selon lequel s'étend le brancard 20 est sensiblement parallèle à l'axe longitudinal X. L'orientation de l'axe A4 est adaptée en fonction de la silhouette extérieure souhaitée pour le véhicule automobile.

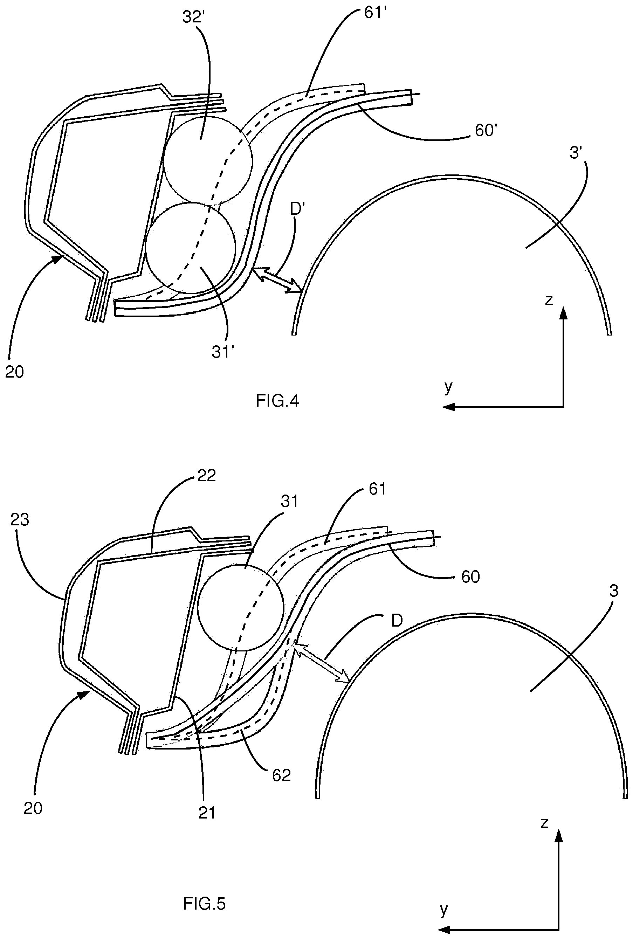

Le pied milieu 10 et le brancard 20 sont généralement réalisés à partir d'acier. Ils peuvent être formés par l'assemblage de plusieurs couches d'acier embouti. La figure 5 illustre par exemple une section d'un brancard 20 comprenant trois couches. Une première couche peut être une doublure de brancard 21. Une deuxième couche peut être un renfort de brancard 22. Une troisième couche peut être un coté de caisse 23. La doublure de brancard 21 est une couche apparaissant du coté intérieur de la caisse 2. Le coté de caisse 23 est une couche apparaissant du coté extérieur de la caisse 2. Enfin, le renfort de brancard 22 est une couche intermédiaire entre la doublure de brancard 21 et le coté de caisse 23. Ces différentes couches 21, 22, 23 peuvent être assemblées entre elles par exemple par soudure, par rivetage, par sertissage ou par vissage. Les différentes couches sont séparées par un volume d'air. De la même manière le pied milieu 10 peut comprendre une doublure de pied milieu, un renfort de pied milieu ou encore un coté de caisse.

Comme particulièrement visible sur la figure 2, une extrémité supérieure du pied milieu 10 est fixée à une partie approximativement centrale du brancard 20. Ainsi, l'ensemble formé par le pied milieu 10 et le brancard 20 est en forme de « T ». Le pied milieu 10 et le brancard 20 peuvent être assemblés ensemble par exemple par soudure, par rivetage, par sertissage ou par vissage. Le pied milieu 10 et le brancard 20 délimitent une partie des contours d'une vitre latérale avant 5a et d'une vitre latérale arrière 5b.

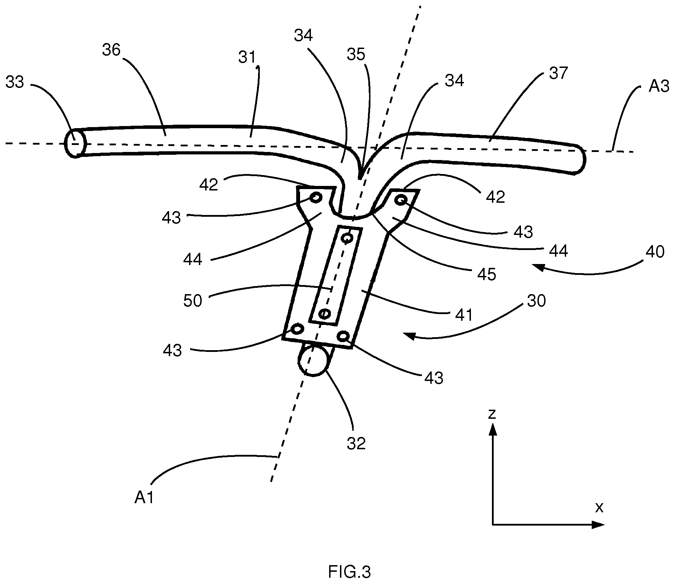

Le véhicule automobile comprend également un dispositif d'airbag 30 illustré sur la figure 3. Le dispositif d'airbag 30 comprend un sac 31 gonflable et un générateur 32. Le sac 31 est apte à se déployer dans un habitacle du véhicule, en particulier à proximité d'un passager. Le sac 31 est apte à se déployer d'une part entre un passager avant 3 et la vitre latérale avant 5a et d'autre part entre un passager arrière et une vitre latérale arrière 5b. Un tel dispositif d'airbag peut également être dénommé « airbag rideau » en référence à l'écran formé entre une vitre 5a, 5b et le passager. En variante le dispositif d'airbag 30 pourrait n'être apte qu'à se déployer pour un seul passager, un passager avant 3 ou un passager arrière. Le générateur 32 est apte à expulser de l'air ou un gaz pour gonfler le sac grâce à une réaction chimique explosive. Le générateur 32 est une sorte de cartouche de gaz de forme générale allongée selon un axe A1 d'orientation sensiblement parallèle à l'axe Z. La forme du générateur peut s'apparenter à un cylindre. Ainsi, l'axe A1 peut être défini comme un axe de révolution de la forme globale du générateur 32. Le générateur 32 comprend à une extrémité un orifice de sortie orienté suivant l'axe A1 et communiquant avec le sac 31. Ainsi, lorsque le générateur est activé il expulse de l'air ou du gaz au travers de cet orifice dans le sac 31.

On définit un agencement 4 comme un ensemble comprenant le pied milieu 10, le brancard 20 et le dispositif d'airbag 30 selon une disposition particulière.

Le générateur 32 est positionné le long du pied milieu 10. L'axe A1, que nous pouvons également dénommer premier axe, et l'axe A2, que nous pouvons également dénommer deuxième axe sont parallèles ou sensiblement parallèles. Autrement dit, le générateur 32 est aligné sur le pied milieu 10. Plus particulièrement, en considérant une projection transversale du générateur 32 et du pied milieu 10, l'axe A1 et l'axe A2 peuvent apparaitre confondus. En variante, l'axe A1 et l'axe A2 pourraient ne pas être exactement parallèles et la projection transversale du générateur 32 pourrait alors être inclue dans la projection transversale du pied milieu. Selon une autre variante, l'axe A1 pourrait être vertical quand bien même le pied milieu ne serait pas exactement vertical.

Le sac 31 peut se déployer d'une première configuration à une deuxième configuration. Dans sa première configuration, le sac 31 est replié suivant une forme allongée selon un axe A3 sensiblement parallèle à l'axe X. Dans sa première configuration le sac peut être enroulé sur lui-même et avoir au moins grossièrement une forme cylindrique. En variante, le sac être plié en accordéon, en zigzag ou bien selon toute autre disposition. Ainsi, le terme « replié » désigne aussi bien une configuration comprenant un enroulement qu'une configuration comprenant un pliage en accordéon ou en zigzag. Une section circulaire 33 du sac en configuration repliée est particulièrement visible sur les figures 1, 3 et 5. En configuration repliée, l'axe A3, que nous pouvons également dénommer troisième axe, est sensiblement parallèle à l'axe A4, que nous pouvons également dénommer quatrième axe. En configuration repliée, le sac s'étend donc le long du brancard 20. Le générateur 32 étant positionné le long du pied milieu 10 selon un axe sensiblement vertical, le sac 31 comprend une courbure 34 d'environ un quart de cercle pour se connecter à l'orifice du générateur 32. La courbure 34 s'étend donc de l'axe A1 à l'axe A3.

Le générateur 32 est positionné contre le pied milieu 10 à hauteur d'un point de renvoi 50 d'une ceinture de sécurité. En particulier, le générateur 32 est positionné derrière le point de renvoi 50 selon l'axe transversal Y, c'est-à-dire entre le point de renvoi 50 et le pied milieu 10. Le point de renvoi 50 peut comprendre un anneau ou une réglette au travers duquel ou de laquelle passe la ceinture de sécurité. D'un coté du point de renvoi 50, la ceinture de sécurité redescend vers la base du siège ou elle est fixée. De l'autre coté du point de renvoi, la ceinture de sécurité est destinée à passer en diagonal devant le buste du passager et à redescendre vers un point de fixation amovible de la ceinture de sécurité.

Le générateur 32 peut être positionné dans un évidement 12 du pied milieu 10. Un tel évidement 12 est particulièrement visible sur la figure 2. L'évidement 12 peut être un ajour ou une dépression dans la doublure de pied milieu. Un ajour peut être obtenu en retirant, par exemple en découpant, un morceau de la doublure de pied milieu. Une dépression peut être obtenue en déformant localement la doublure de pied milieu pour former un logement ou une cavité conformée pour recevoir le générateur. L'évidement peut avoir globalement la forme d'une section du générateur 32 suivant un plan XZ d'axes longitudinal et vertical. L'évidement 12 peut être de forme globalement rectangulaire, le grand coté du rectangle étant aligné selon l'axe A2.

L'évidement 12 du pied milieu 10, qu'il s'agisse d'un ajour ou d'une dépression, peut avoir une forme allongée suivant un axe sensiblement parallèle au deuxième axe A2. L'évidement 12 peut déboucher à l'extrémité supérieure du pied milieu. Ainsi, le pied milieu peut avoir dans sa partie supérieure globalement une forme d'un « U ». Le générateur 32 est donc positionné à l'intérieur du « U ». Le pied milieu peut se diviser en deux branches 13 de forme globalement symétrique par rapport à l'axe A2. Chacune des deux branches 13 est fixée au brancard 20.

Le pied milieu 10 et/ou le brancard 20 peuvent comprendre un arrondi de manière à éviter de déchirer le sac lors de son déploiement sur une arrête saillante. Par exemple, l'évidement 12 peut comprendre un contour 14 de forme arrondie. Ou encore, l'angle formé entre l'évidement 12 et un bord supérieur 15 du pied milieu peut comprendre un arrondi. Le brancard 20 peut également comprendre des bords arrondis au niveau de sa jonction avec le pied milieu 10. En variante, le pied milieu 10 et/ou le brancard 20 et/ou le sac 31 peuvent comprendre un élément de protection en caoutchouc, ou en tout autre matériau souple équivalent, pour préserver le sac 31 d'un endommagement lors de son déploiement. Par exemple le sac 31 pourrait être enveloppé par un manchon en caoutchouc au niveau de sa courbure 34.

Comme cela est particulièrement visible sur les figures 1 et 3, le dispositif d'airbag 30 comprend une dérivation 35 en aval du générateur 32 selon le sens de circulation du gaz ou de l'air lors du déploiement du sac 31. Une première branche issue de la dérivation 35 est reliée à une partie avant 36 du sac 31 et est apte à se déployer entre le passager 3 avant et la vitre latérale avant 5a. Une deuxième branche issue de la dérivation 35 est reliée à une partie arrière 37 du sac 31 et est apte à se déployer entre le passager arrière et la vitre latérale arrière 5b. La dérivation 35 peut être directement réalisée dans le sac 31. En variante, la dérivation pourrait être réalisée avec un raccord pneumatique, c'est-a-dire un tuyau, en forme de « Y » interposée entre le générateur 32, un sac avant et un sac arrière.

La partie avant 36 du sac 31 et la partie arrière 37 du sac 31 s'étendent toutes deux selon l'axe A3 mais dans des directions opposées. Dans le cas de figure ou le dispositif d'airbag ne comprendrait qu'une partie avant 36 ou qu'une partie arrière 37, l'intégration d'une telle dérivation serait bien sûr inutile. Dans ce cas de figure le sac pourrait néanmoins être relié au générateur par l'intermédiaire d'un raccord pneumatique en quart de cercle.

L'agencement 4 peut comprendre une patte 6 fixée directement ou indirectement au pied milieu 10 ou au brancard 20 pour calibrer le gonflage d'une portion du sac 31 au niveau de la courbure 34 et/ou au niveau du raccordement avec le générateur 32. Ainsi le gonflage du sac dans une zone non désirable, par exemple dans un volume situé entre la doublure de pied milieu et un renfort de pied milieu, peut être évité. La patte 6 agit donc comme un guide pour le sac lors de son gonflage.

L'agencement 4 peut comprendre un dispositif de sécurité 40 tel qu'illustré sur la figure 3. Le dispositif de sécurité 40 comprend le générateur 32 auquel est relié le sac 31. Le dispositif de sécurité 40 comprend également le point de renvoi 50 et un support 41. Le support 41 peut être une plaque s'étendant sensiblement selon un plan XZ d'axes longitudinal et vertical. Le support 41 peut avoir une forme globalement rectangulaire, le grand côté du rectangle étant sensiblement parallèle à l'axe vertical Z. Préférentiellement, le support 41 est réalisé en acier. Les bords du support 41 pouvant être en contact avec le sac (notamment le bord supérieur 42) peuvent comprendre un arrondi afin d'éviter un endommagement du sac lors de son déploiement.

Le support 41 est destiné à être fixé au pied milieu 10. Une première face du support 41 est alors en appui contre le pied milieu 10. A cet effet, le support 41 peut comprendre des trous de fixation 43 destinés à coopérer avec des trous de fixation 16 du pied milieu 10 et des vis de fixation. Selon le mode de réalisation illustré, le support comprend quatre trous de fixations 43 répartis à proximité de quatre coins du support 41. Les trous de fixation 16 du pied milieu 10 sont disposés à proximité de quatre coins de l'évidement 12. Ainsi, le support 41 recouvre l'évidement 12. En variante, le support 41 et le pied milieu 10 pourraient comprendre un plus petit ou un plus grand nombre de trous de fixation, voire même être fixés ensemble par un autre moyen de fixation tel que la soudure, le sertissage ou encore le rivetage.

Le support 41 peut comprendre deux excroissances 44 dans lesquelles sont réalisés deux trous de fixation 43 supérieurs. Grâce aux deux excroissances 44, le support est élargit localement à hauteur des trous de fixation 43 supérieurs. La distance séparant les deux trous de fixation supérieurs est plus grande que la distance séparant les deux trous de fixation inférieurs ce qui libère un espace suffisant pour faire passer le sac entre les deux trous de fixations supérieurs. Le support peut comprendre un dégagement 45 en forme de demi-cercle entre les trous de fixation supérieurs afin de libérer un espace suffisant pour la courbure du sac 31 entre l'axe A1 et l'axe A3.

Le générateur 32 est fixé sur la première face du support 41. Le point de renvoi 50 est fixé sur une deuxième face du support, opposée à la première face. Les moyens de fixations mis en oeuvre pour fixer le support 41 au générateur 32 et au point de renvoi 50 peuvent être le vissage mais également la soudure, le sertissage ou encore le rivetage ou le clipsage et/ou toute combinaison de ces moyens de fixation. Le support 41 est fixé au pied milieu 10 de sorte à ce que l'axe A1 et l'axe A2 soient sensiblement parallèles

Le générateur 32 est positionné entre le pied milieu 10 et le support 41. Le générateur 32 est donc à la fois dissimulé et protégé par le pied milieu 10 et par le support 41. Le support 41 contribue à rigidifier le pied milieu 10. L'épaisseur du support 41 peut être ajustée en fonction de la rigidité et/ou de la résistance souhaitée pour la fixation du point de renvoi 50. Ainsi, pour augmenter la rigidité de la fixation du point de renvoi 50, il suffit d'adapter les dimensions du support. En particulier, il suffit d'augmenter l'épaisseur du support et non de l'ensemble du pied milieu 10. La quantité de matériau mis en oeuvre est donc optimisée. Ainsi, le support 41 compense, voire même surcompense la perte de rigidité du pied milieu 10 liée à son évidement 12. Le dispositif de sécurité 40 permet d'agencer le dispositif d'airbag 30 de sorte à ce que le générateur 32 soit positionné le long du pied milieu 10.

Lors de la fabrication du véhicule automobile 1, le dispositif d'airbag 30 peut être assemblé en suivant la procédure suivante. Dans une première étape, on réalise l'évidement du pied milieu 10. L'évidement peut être réalisé par emboutissage ou par une découpe locale dans la doublure de pied milieu. Dans une deuxième étape, on assemble le dispositif de sécurité 40, c'est-à-dire on fixe le générateur 32 et le point de renvoi 50 sur le support 41. Dans une troisième étape, le générateur 32 est introduit dans l'évidement 12 et le support 41 est mis en appui contre le pied milieu 10. Dans une quatrième étape, on fixe le support 41 sur le pied milieu 10. En particulier, on peut visser les vis de fixation au travers des trous de fixation 43 du support 41 et au travers des trous de fixation 16 du pied milieu 10.

La figure 4 illustre un dispositif d'airbag rideau en coupe agencé selon l'état de l'art. Le générateur 32' de forme cylindrique est positionné contre une doublure de brancard et au dessus du sac 31' en position repliée. Les sections selon un plan transversal et vertical du générateur et du sac en configuration repliée sont des sections circulaires de tailles voisines. Une garniture de pavillon 60' est représentée par un trait plein. La garniture de pavillon 60' est un habillage intérieur permettant de masquer le pied milieu 10 et le brancard 20. La forme que pourrait avoir la garniture de pavillon 60' en absence de dispositif d'airbag rideau est représentée par un trait en pointillés 61'. On définit la distance D' comme la distance séparant la garniture de pavillon 60' de la tête d'un passager 3'. On constate donc que l'intégration d'un dispositif d'airbag rideau agencé selon l'état de l'art génère une distance D' assez faible.

La figure 5 illustre un dispositif d'airbag rideau en coupe agencé selon l'invention. Le générateur 32 de forme cylindrique étant positionné le long du pied milieu, il n'apparait pas dans cette coupe. Seul le sac 31 s'étend le long du brancard 20. Une garniture de pavillon 60 est représentée par un trait plein. La forme que pourrait avoir la garniture de pavillon 60 en absence de dispositif d'airbag rideau est représentée par un premier trait en pointillés 61. La forme que pourrait avoir la garniture de pavillon avec un agencement de l'airbag rideau selon l'état de l'art est représentée par un deuxième trait en pointillés 62. On définit la distance D comme la distance séparant la garniture de pavillon 60 et la tête du passager 3. On constate donc que l'intégration d'un dispositif d'airbag rideau agencé selon l'invention génère une distance D plus importante que selon l'état de l'art. Le confort s'en retrouve amélioré. De la même manière la distance entre la tête du passager et le sac en configuration repliée est également augmentée ce qui permet de garantir un déploiement suffisant du sac avant que le passager entre en contact avec le sac. La sécurité du passager est donc également améliorée. Le générateur est positionné dans un volume de l'habitacle jusqu'alors inexploité. Un tel emplacement permet d'envisager l'utilisation de générateur plus puissant et plus volumineux permettant de réduire encore le temps de gonflage du sac et/ou d'augmenter le volume du sac. Le volume libéré au niveau du brancard 20 peut être utilisé pour améliorer le confort et/ou pour utiliser des brancards plus résistants mais également plus volumineux.

L'invention concerne aussi le dispositif de sécurité en tant que tel, dispositif de sécurité dont un mode de réalisation est décrit plus haut.

## Revendications

1. Agencement (4) pour un véhicule automobile (1), l'agencement comprenant :
- un dispositif d'airbag (30) muni d'un sac (31) apte à se déployer à proximité d'un passager d'un véhicule automobile (1) ou entre un passager (3) et une vitre latérale (5a, 5b) d'un véhicule automobile (1), et muni d'un générateur (32) de forme générale allongée selon un premier axe (A1) et apte à expulser un gaz pour gonfler le sac (31), et
- un pied milieu (10) d'une caisse (2) d'un véhicule automobile (1), le pied milieu (10) s'étendant selon un deuxième axe (A2) sensiblement vertical,
**caractérisé en ce que** le générateur (32) est positionné le long du pied milieu (10), le premier axe (A1) et le deuxième axe (A2) étant sensiblement parallèles.

2. Agencement (4) selon la revendication précédente, **caractérisé en ce que** le sac (31) est apte à se déployer d'une première configuration à une deuxième configuration, le sac (31) étant dans sa première configuration replié suivant une forme allongée selon un troisième axe (A3), et **en ce que** l'agencement comprend un brancard (20) pour caisse (2), le brancard (20) s'étendant selon un quatrième axe (A4) sensiblement parallèle à un axe longitudinal (X) d'un véhicule automobile (1), le troisième axe (A3) et le quatrième axe (A4) étant sensiblement parallèles.

3. Agencement (4) selon l'une des revendications précédentes, **caractérisé en ce qu'**il comprend un point de renvoi (50) d'une ceinture de sécurité, le générateur (32) étant positionné à hauteur du point de renvoi (50).

4. Agencement (4) selon l'une des revendications précédentes, **caractérisé en ce que** le générateur (32) est positionné dans un évidement (12) du pied milieu (10), notamment dans un évidement (12) d'une doublure de pied milieu.

5. Agencement (4) selon la revendication précédente, **caractérisé en ce que** l'évidement (12) du pied milieu (10) est un ajour de forme allongée suivant un axe sensiblement parallèle au deuxième axe (A2).

6. Agencement (4) selon l'une des revendications 4 ou 5, **caractérisé en ce que** le pied milieu (10) et/ou un brancard (20) comprennent une forme arrondie et/ou un élément de protection en caoutchouc, pour préserver le sac (31) d'un endommagement lors de son déploiement.

7. Agencement (4) selon l'une des revendications précédentes, **caractérisé en ce que** le dispositif d'airbag (30) comprend une dérivation (35) en aval du générateur (32), une première branche issue de la dérivation (35) étant reliée à une partie avant (36) du sac (31) apte à se déployer entre un passager (3) avant et une vitre latérale avant (5a) d'un véhicule automobile (1), une deuxième branche issue de la dérivation (35) étant reliée à une partie arrière (37) du sac (31) apte à se déployer entre un passager arrière et une vitre latérale arrière (5b) d'un véhicule automobile (1).

8. Agencement (4) selon l'une des revendications précédentes, **caractérisé en ce qu'**il comprend une patte (6) au niveau du pied milieu (10) pour calibrer le gonflage d'une portion du sac (31).

9. Agencement (4) selon l'une des revendications précédentes, **caractérisé en ce qu'**il comprend un dispositif de sécurité (40) comprenant le dispositif d'airbag (30), un point de renvoi (50) d'une ceinture de sécurité et un support (41), le générateur (32) étant fixé sur une première face du support, le point de renvoi étant fixé sur une deuxième face du support, le support (41) étant fixé sur le pied milieu (10).

10. Dispositif de sécurité (40), **caractérisé en ce qu'**il comprend un dispositif d'airbag (30), un point de renvoi (50) d'une ceinture de sécurité et un support (41), un générateur (32) du dispositif d'airbag (30) étant fixé sur une première face du support (41), le point de renvoi étant fixé sur une deuxième face du support, le support (41) étant destiné à être fixé sur un pied milieu (10) de caisse de véhicule automobile.

11. Véhicule automobile (1) comprenant un agencement (4) selon l'une des revendications 1 à 9 et/ou un dispositif de sécurité (40) selon la revendication précédente.
